(19) Europäisches Patentamt / European Patent Office / Office européen des brevets

(11) **EP 1 561 273 B1**

(12) **EUROPÄISCHE PATENTSCHRIFT**

(45) Veröffentlichungstag und Bekanntmachung des Hinweises auf die Patenterteilung:
**03.08.2016 Patentblatt 2016/31**

(21) Anmeldenummer: **03796005.1**

(22) Anmeldetag: **10.11.2003**

(51) Int Cl.:
*H02M 5/27* *(2006.01)*

(86) Internationale Anmeldenummer:
**PCT/EP2003/050808**

(87) Internationale Veröffentlichungsnummer:
**WO 2004/045058 (27.05.2004 Gazette 2004/22)**

(54) **VERFAHREN ZUM BETRIEB EINES MATRIXKONVERTERS SOWIE GENERATOR MIT MATRIXKONVERTER ZUR DURCHFüHRUNG DIESES VERFAHREN**

METHOD FOR OPERATING A MATRIX CONVERTER AND GENERATOR WITH MATRIX CONVERTER FOR CARRYING OUT SAID METHOD

PROCEDE DE FONCTIONNEMENT D'UN CONVERTISSEUR MATRICIEL ET GENERATEUR AVEC CONVERTISSEUR MATRICIEL UTILISE POUR LA MISE EN OEUVRE DE CE PROCEDE

(84) Benannte Vertragsstaaten:
**DE GB**

(30) Priorität: **11.11.2002 DE 10252234**

(43) Veröffentlichungstag der Anmeldung:
**10.08.2005 Patentblatt 2005/32**

(73) Patentinhaber: **ALSTOM Technology Ltd**
**5400 Baden (CH)**

(72) Erfinder:
• **LACAZE, Alain**
**F-90850 Essert (FR)**
• **TURRI, Sylvie**
**F-70170 Port-sur-Saone (FR)**

(74) Vertreter: **General Electric Technology GmbH**
**GE Corporate Intellectual Property**
**Brown Boveri Strasse 7**
**5400 Baden (CH)**

(56) Entgegenhaltungen:
**EP-A- 1 199 794 EP-A- 1 286 455**

• **PATENT ABSTRACTS OF JAPAN vol. 2000, no. 11, 3. Januar 2001 (2001-01-03) -& JP 2000 232785 A (KUKIHARA TAKEAKI), 22. August 2000 (2000-08-22)**

**Beschreibung**

TECHNISCHES GEBIET

Die vorliegende Erfindung bezieht sich auf das Gebiet der Leistungselektronik und insbesondere auf die Stromerzeugung mit einem Synchrongenerator, der oberhalb der synchronen Netzfrequenz betrieben wird, sowie den Antrieb von Synchronmotoren und Induktionsmotoren mit wechselnder Geschwindigkeit.

Die Efindung bezieht sich auf ein Verfahren zum Betrieb eines Matrixkonverters, welcher, wenn er zur Konversion von m Phasen eines Generators in Wechselspannung mit n (n<m) Phasen einer mit einem Netzwerk verbunden Last betrieben wird, abwechselnd die n Phasen der Last mit einer Mehrzahl von kontrollierbaren bi-direktionalen, in einer (m x n)-Matrix angeordneten Schaltern verbindet, wobei n Phasen des Generators immer mit der Last verbunden sind, während (m-n) Phasen des Generators nicht mit der Last verbunden sind, wie im Oberbegriff von Anspruch 1 beschrieben. Sie bezieht sich ausserdem auf die Verwendung eines derartigen Verfahrens sowie auf einen Generator umfassend einen zugeschalteten Matrixconverter generat it einem Matrixconverter zur Durchführung eines derartigen Verfahrens.

STAND DER TECHNIK

Bei der Stromerzeugung führt die Erhöhung der Drehzahl einer Turbine bei vorgegebener Leistung zu einer Verringerung der Grösse und der Kosten. Auch der Wirkungsgrad kann verbessert werden. Turbinen für die Stromerzeugung bis hinauf zu 70 MW werden bereits über Getriebe mit den Generatoren verbunden, um höhere Drehzahlen zu ermöglichen. Bei höheren Leistungen wird der Einsatz von Getrieben aus Sicherheitsgründen zunehmend schwierig. Die Turbine wird dann mit Synchrongeschwindigkeit betrieben.

Wenn ein Getriebe verwendet wird, ergeben sich die folgenden Nachteile:

- ein festes Übersetzungsverhältnis;

- ein Geräuschpegel oberhalb von 100 dB für 40 MW bzw. 115 dB für 70 MW;

- mechanische Verluste, die nicht von der jeweiligen Last abhängen; und

- hohe Anforderungen an die Kühlung und Schmierung mit Öl;

Eine Alternative wäre der Einsatz von statischen Frequenzkonvertem (Leistungselektronik) in der Form von Gleichrichtern/Invertern. Die erwarteten Vorteile wären:

- verringerte Kosten für den Generator in Übereinstimmung mit einem konstanten Produkt aus Volumen und Drehzahl;

- ein standardisierter Generator für sowohl 50 als auch 60 Hz;

- eine einstellbare Geschwindigkeit, welche die Wiederherstellung des Teillast-Wirkungsgrades der Turbine ermöglicht;

- reduzierte Verluste in Bezug auf das Getriebe zumindest bei Teillast;

- eine erhebliche Geräuschverminderung;

- eine saubere (ölfreie) Kühlung;

- keine Obergrenze der möglichen Leistung, wodurch eine erhebliche Kostenreduktion bei der Turbine durch Verkleinerung ermöglicht wird, während ein Getriebe nicht dieselbe Möglichkeit bietet; und

- Verwendung des Generators als Startermotor (bei Gasturbinen-Anwendungen).

Sowohl bei der Stromerzeugung als auch bei Antrieben würde die Verringerung von Verlusten der statischen Frequenzkonverter erhebliche Kosteneinsparungen zur Folge haben. Eine Verringerung der Verluste würde vor allem die Investitionskosten beeinflussen, weil die Kühlung einen wesentlichen Teil der Gesamtkosten des Konverters ausmacht.

Weiterhin eröffnen reduzierte Anforderungen an die Kühlung die Möglichkeit, die Elektronik kompakter zu gestalten, und damit die Integration der Leistungselektronik in die Kraftwerksanlage oder sogar in die Generatoreinheit zu erleichtern. Eine nahe Integration der Leistungselektronik in die Generatoreinheit hätte den zusätzlichen Vorteil kurzer Verbindungsleitungen, gemeinsam benutzter Kühlungseinrichtungen und eines kleineren Gesamtvolumens (Einsparungen bei Gebäuden).

Auch im Bereich der grossen Antriebe bis zu einigen 10 MW ergeben sich diese Vorteile aus den reduzierten Verlusten und schaffen so einen wettbewerbsmässigen Vorteil gegenüber direkten mechanischen Antrieben von einer Turbine.

Die indirekte Umwandlung (AC/DC/AC), die in Konvertern (Gleichrichtern/Invertern) benutzt wird, wird durch Erzeugung eines gerichteten Gleichstromes oder einer gerichteten Gleichspannung aus der dreiphasigen Quelle (Netz für Motoren, Generator für die Stromerzeugung) bewirkt. Der Gleichstrom oder die Gleichspannung werden dann durch einen Inverter wieder in einen Wechselstrom umgewandelt.

Eine Induktivität (Stromkonverter) oder eine Kondensatorbank (Spannungskonverter) werden in den Zwischenkreis eingeschaltet, um die Welligkeit des Stromes bzw. Spannungsspitzen zu reduzieren.

Heutige Konverter setzen Thyristoren ein. Wenn eine natürliche Kommutierung der Thyristoren möglich ist, werden die Verluste im Konverter reduziert. Induktionsmotoren beispielsweise nehmen jedoch reaktive Leistung auf. Um diese reaktive Leistung aus dem Netz zur Verfügung zu stellen, sollte es möglich sein, den Strom in einem vorgegebenen Arm des Konverters zu einem beliebigen Zeitpunkt abschalten zu können. In diesem Fall liegen eine Zwangskommutierung und damit erhöhte Verluste vor. In der elektrischen Maschine (Generator oder Motor) sind die Phasenströme zerhackte Gleichströme. Die Ankerrückwirkung rotiert nicht mit konstanter Geschwindigkeit und Amplitude, sondern springt gemäss dem Kommutierungszyklus herum. Ein 6- oder 12-pulsiger Konverter gibt sechs oder zwölf verschiedene Winkelpositionen für die Ankerrückwirkung. Hieraus ergeben sich starke pulsierende Drehmomente und grosse zusätzliche Verluste in der elektrischen Maschine, die zu einer Verschlechterung der Maschine führen können. In 12-pulsigen Konvertern ist der Effekt 4mal geringer als in 6-pulsigen.

Spannungskonverter verwenden GTOs mit ihren inhärenten hohen Schaltverlusten, sowie IGBTs oder IGCTs. Die einzelnen Bauelemente haben eine geringere Leistung als Thyristoren, so dass mehr Bauteile für eine vorgegebene Spannung bzw. einen vorgegebenen Strom benötigt werden. Spannungskonverter können vom Einsatz von Pulsbreitenmodulations-Techniken profitieren, welche die Form der Stromkurven verbessern und die Harmonischen reduzieren. Je höher dabei die Schaltfrequenzen sind, um so besser, ausser im Hinblick auf Verluste und dielektrische Ermüdung. Die Kurvenform des Stromes kann weitgehend sinusförmig sein, so dass ein Leistungsabfall der elektrischen Maschine vermieden wird.

Eine direkte Umwandlung (AC/AC) ist beispielsweise durch einen sogenannten Zyklokonverter möglich. Sie hat erhebliche Vorteile auf der Seite der elektrischen Maschine, da der Strom mehr oder weniger eine Sinuswelle ist und nicht ein zerhackter Gleichstrom. Sie reduziert die Höhe der zusätzlichen innerhalb der elektrischen Maschine anfallenden Verluste, und sie vermeidet pulsierende Drehmomente.

Beim Einsatz von Zyklokonvertern ist der erzielbare Frequenzbereich jedoch auf 0 -1/3 der Eingangsfrequenz beschränkt. Das Überschreiten der 1/3-Grenze führt wegen des nicht-ausgeglichenen Betriebes zu einer Überdimensionierung bis zu einem Faktor 3.

Eine andere Möglichkeit der direkten Umwandlung ist durch einen sogenannten Matrixkonverter gegeben, bei dem jede Phase einer mehrphasigen Quelle (Generator oder Netz) mit jeder Phase einer mehrphasigen Last (Netz, passive Last, Motoren, etc.) jeweils durch einen bidirektionalen Schalter verbunden bzw. verbindbar ist (siehe z.B. N. Mohan et al., Power Electronics, 2. Edition, John Wiley & Sons, New York, S. 11-12). Die Schalter bestehen aus Thyristoren in ausreichender Zahl, um die Differenzspannung zwischen den Phasen und die Phasenströme auszuhalten, und um eine Stromumkehr zu ermöglichen. Sie können als wahrhaft bidirektionale Bauelemente angenommen werden, mit der Möglichkeit, Zusatzbeschaltungen wie Snubber oder die Stromversorgungen für die Ansteuerimpulse für die antiparallelen Bauelemente gemeinsam zu benutzen.

Die Schalter sind bei m Phasen der Quelle und n Phasen der Last in einer (m x n)-Matrix angeordnet. Dies schafft die Möglichkeit beliebiger Verbindungen zwischen den Eingangsphasen und Ausgangsphasen, hat aber zugleich den Nachteil, dass bestimmte Schaltzustände der Matrix nicht erlaubt sein dürfen, weil sonst beispielsweise ein Kurzschluss auftritt. Des weiteren ist es wünschenswert, die Kommutierung von einer Phase auf eine andere Phase so durchzuführen, dass möglichst geringe Schaltverluste anfallen.

In der US-A-5,594,636 ist ein Matrixkonverter und ein Verfahren zu seinem Betrieb beschrieben, bei dem die Kommutierung zwischen den Phasen teilweise als natürliche Kommutierung durchgeführt wird, aber auch als Zwangskommutierung, wenn eine natürliche Kommutierung nicht möglich ist. Obwohl aufgrund der natürlichen Kommutierung die Schaltverluste bei dieser Art der Ansteuerung verringert sind, verbleiben die Schaltverluste, die bei der Zwangskommutierung entstehen. Darüber hinaus müssen wegen der möglichen Zwangskommutierung auf allen Plätzen der Matrix abschaltbare Bauelemente eingesetzt werden, wodurch der Schaltungsaufwand erheblich erhöht wird.

Dennoch ist es möglich, einen Matrixkonverter so zu betreiben, dass nur natürliche Kommutierungen auftreten.

Dies kann erreicht werden, indem ein Umschalten von einer ausgewählten verbundenen Phase des Generators zu einer ausgewählten nicht-verbundenen Phase des Generators nur erlaubt wird, wenn bestimmte Bedingungen erfüllt sind. Eine derartige Betriebsweise, welche eine billige und zuverlässige Kontrolle des Matrixkonverters erlaubt, kann nur dazu verwendet werden, die Frequenz zu kontrollieren, nicht aber die Spannung. Die Spannung wird deshalb mit Hilfe des Erregersystems kontrolliert, wie dies im Bereich der grossen Leistungserzeugung üblich ist. Eine derartige Spannungskontrolle ist unproblematisch, solange die rotierende Maschine im Generator-Modus betrieben wird. Wenn aber die rotierende Maschine als Motor benutzt wird, verlangen Drehmoment- und Stromkontrolle bei niedriger Geschwindigkeit eine tatsächliche Modulation der Spannung in Übereinstimmung mit der sogenannten konstanten V/f-Regel.

Wenn der Antrieb der Energieanlage eine Gasturbine ist, wird üblicherweise ein statischer Frequenzkonverter, d. h. Gleichrichter/Inverter, dazu verwendet, den Generator als Motor zum Hochfahren der Welle zu verwenden. Die Gasturbine produziert erst positives Drehmoment wenn sie 40 bis 50% der Nenngeschwindigkeit erreicht hat. Während also ein Matrixkonverter auf Basis von vollständiger natürlicher Kommutierung eine Vielzahl von Vorteilen aufweist, so erfordert er dennoch die Bereitstellung eines zusätzliche Mittels zum Hochfahren der Gasturbine insbesondere für den Bereich zwischen 0 bis 20% Last, wo die so genannte "konstante V/f-Regel" erfüllt sein muss. Die hohe Attraktivität des natürlich kommutierten Konverters insbesondere in Bezug auf den Preis, die Kompaktheit und die Effizienz wird entsprechend durch das Erfordernis eines zusätzlichen Start-Bauteils reduziert.

DARSTELLUNG DER ERFINDUNG

Der Erfindung liegt demnach die Aufgabe zugrunde, ein Verfahren zum Betrieb eines Matrixkonverters zur Verfügung zu stellen, sowie einen Matrixkonverter und die Verwendung eines derartigen Matrixkonverters, welche die Nachteile der bekannten Matrixkonverter-Lösungen vermeiden. Dies im dem Sinne, dass z. B. für das Hochfahren der Turbine unter Verwendung des Generators Alternativen zur Verwendung eines separaten Zyklokonverters oder statischen Frequenzkonverters zur Verfügung gestellt werden.

Die Lösung dieser Aufgabe wird durch die Gesamtheit der Merkmale der Ansprüche 1, 6 und 8 erreicht. Das wesentliche der Erfindung besteht darin, den Matrix-konverter im "reverse mode" zu betreiben, gewissermassen als Zyklokonverter. Die Tatsache, dass dies ziemlich einfach und ohne jede Modifikation der Hardware des Matrixkonverters möglich ist, indem einfach die Betriebsweise des Matrixkonverters geändert wird und indem Mittel zur Verfügung gestellt werden, welche die m Phasen des Generators in entsprechende Untergruppen aufzuteilen erlauben, ist unerwartet, und ermöglicht es, eine derartige Betriebsweise eines Matrixkonverters zum Hochfahren einer Gasturbine einzusetzen, unter Verwendung des Generators als Motor und des Netzes als Energiequelle.

Einer ersten bevorzugten Ausführungsform der vorliegenden Erfindung entsprechend erlaubt der Matrixkonverter, wenn er zur Konversion von Energie des Generators zur Last betrieben wird, nur die Regelung der Frequenz, nicht aber der Spannung. Insbesondere in dieser Situation, in welcher der Matrixkonverter nicht direkt in umgekehrter Weise (reverse mode) für das Hochfahren einer Gasturbine infolge der "konstanten V/f-Regel", welche die Kontrolle der Spannung wenigstens innerhalb der ersten Phase des Hochfahrens des Generators, welcher sich wie eine elektrische Maschine benimmt, erforderlich macht, ist das Schalten zwischen zwei verschiedenen Modi vorteilhaft.

Einer weiteren bevorzugten Ausführungsform der vorliegenden Erfindung entsprechend zeichnet sich das Verfahren dadurch aus, dass der Matrixkonverter, wenn er zur Konversion von Energie des Generators zur Last betrieben wird, nur das Umschalten von einer ausgewählten verbundenen Phase des Generators zu einer ausgewählten, nicht-verbundenen Phase des Generators erlaubt, sodass nur natürliche Kommutierungen auftreten. Ein derartiger Matrix-konverter sowie seine Betriebsweise wurden in der DE 10051222 A1 sowie in der korrespondierenden EP 1199794 A2 offenbart.

Typischerweise werden der Schaltzustand der Schalter, der Verbindungszustand der Phasen des Generators, und die Vorzeichen der Ströme in den Phasen des Generators, sowie die differenziellen Spannungen zwischen den Phasen des Generators überwacht und gemessen. Zu spezifizierten, vorzugsweise periodischen Zeitpunkten erfolgt ein Umschalten und für das Umschalten werden eine oder mehrere der Phasen des Generators ausgewählt, welche Generatorphasen entsprechend der durch die Überwachung und Messung verfügbaren Informationen nicht verbunden sind und die Bedingungen erfüllen. Insbesondere werden als bidirektionale Schalter anti-parallele Thyristoren verwendet. Der Matrixkonverter, wie er in den genannten Dokumenten offenbart wird, erlaubt nur die Kontrolle der Frequenz, nicht aber der Spannung, und kann deshalb nicht direkt in umgekehrter Weise (reverse mode) für das Hochfahren des Generators zumindest innerhalb der ersten Phase des Hochfahrens verwendet werden. Die leichte Modifikation, welche in der eingangs genannten Gruppierung der m Generatorphasen in Untergruppen besteht, erlaubt es, sogar einen derartigen Matrixkonverter in umgekehrter Betriebsweise zu betreiben und gleichzeitig Frequenz und Spannung zu kontrollieren.

Einer weiteren bevorzugten Ausführungsform entsprechend umfasst der Generator 6 Phasen und die Last umfasst 3 Phasen, und für den Zyklokonverter-Modus werden die 6 Phasen in 3 Untergruppen aufgeteilt. Für diese spezielle Topologie sind nur zwei Schalter notwendig, um die Phasen des Generators zu gruppieren.

**EP 1 561 273 B1**

Weitere bevorzugte Ausführungsformen sind in den abhängigen Ansprüchen beschrieben.

Die vorliegende Erfindung betrifft ausserdem die Verwendung einer Methode, wie sie oben beschrieben ist, zum Hochfahren eines Generators. Insbesondere wird dabei zum Hochfahren des Generators, d. h. des Generators und der (Gas) Turbine, bis zu 20 bis 30% der Nenngeschwindigkeit des Generators, der Matrixkonverter im Zyklokonverter-Modus betrieben, während von 20 bis 30% der Nenngeschwindigkeit des Generators bis 50% oder sogar hoch bis 100%, der Matrixkonverter in seinem normalen Betriebsmodus ohne unterbrochene, d. h. voneinander getrennte Untergruppen betrieben wird. Es ist bekannt, dass nur innerhalb der ersten 20 bis 30% der Nenngeschwindigkeit des Generators Spannungskontrolle erforderlich ist, während im Bereich oberhalb einfache Frequenzkontrolle genügt. Es reicht deshalb, den Matrixkonverter nur in dieser ersten Phase im Zyklokonverter-Modus zu fahren, in welcher ersten Phase Spannungskontrolle absolut notwendig ist, und dann in den normalen Matrixkonverter-Modus umzuschalten, vorzugsweise unter ausschliesslicher Verwendung von natürlichen Kommutationen, wie dies oben beschrieben ist.

Weitere bevorzugte Ausführungsformen der genannten Verwendung sind in den abhängigen Ansprüchen beschrieben.

Abgesehen vom Obigen betrifft die vorliegende Erfindung auch einen Generator umfassend einen zugeschalteten Matrixkonverter zur Implementierung der Betriebsweise eines Matrixkonverters, wie sie oben beschrieben wurde, oder zur obengenannten Verwendung. Der Matrixkonverter umfasst dabei eine Mehrzahl von bi-direktionalen, in einer (m x n)-Matrix angeordneten Schaltern, wobei die von einer Steuerung kontrollierten Schalter m Eingänge mit n Ausgängen auswählbar verbinden. Er ist dadurch gekennzeichnet, dass erste Mittel zur Bestimmung des Vorzeichens der Ströme der Eingänge angeordnet sind, und dass zweite Mittel zur Bestimmung des Vorzeichens der Spannungen zwischen den Eingängen angeordnet sind, und dass die ersten und zweiten Mittel in aktiver Verbindung mit der Steuerung stehen. Ein derartiger Matrix-konverter ist z. B., für den Fall von ausschliesslich natürlichen Kommutierungen, in der DE 10051222 A1 wie auch in der korrespondierenden EP 1199794 A2 offenbart worden. Der Offenbarungsgehalt dieser beiden Dokumente soll explizit in den Offenbarungsgehalt der vorliegenden Anmeldung eingeschlossen sein, auch in Bezug auf den Matrixkonverter selbst. Ein derartiger Matrixkonverter zeichnet sich vorzugsweise dadurch aus, dass die Schalter, welche vorzugsweise anti-parallel geschaltete Thyristoren umfassen, mit der Steuerung (Steuereinheit) über eine Signalleitung verbunden sind, wobei über diese Signalleitung Information über den Schaltstatus der Schalter an die Steuerung übergeben wird.

Weitere bevorzugte Ausführungsformen des Generator nach der Erfindung sind in den abhängigen Ansprüchen beschrieben.

Die Generatoreinheit des vorliegenden Erfindung umfasst wenigstens einen Matrixkonverter, wie er oben beschrieben wurde, und wenigstens einen Generator, welcher Generator einen Rotor und einen Stator umfasst, dadurch gekennzeichnet, dass zum Einschalten des Zyklokonverter-Modus Schalter zur Aufteilung in entsprechende Untergruppen an den Wicklungen des Stators vorgesehen sind. Mit anderen Worten kann die schwebende Erde, welche üblicherweise auf der dem Matrixkonverter abgewandten Seite des Stators vorliegt, in die genannten Untergruppen unter Zuhilfenahme von einfachen Schaltern aufgeteilt werden, sodass je nach Betriebsweise entweder eine gemeinsame schwebende Erde oder Untergruppen (bei offenen Schaltern) vorliegen.

Bei einer weiteren bevorzugten Ausführungsform der vorliegenden Erfindung umfasst der Generator 6 Phasen und die Last 3 Phasen, wobei für den Zyklokonverter-Modus die 6 Phasen in drei Untergruppen aufgeteilt sind. In diesem Fall sind vorzugsweise 2 Schalter angeordnet, welche es erlauben, die schwebende Erde der Wicklungen des Stators für normalen Matrixkonverter-Modus zu verbinden, und welche erlauben, die genannte schwebende Erde in drei unverbundene, d. h. voneinander getrennte Untergruppen zu trennen, wobei jede der Untergruppen zwei Generatorphasen umfasst.

Weitere Ausführungsformen ergeben sich aus den abhängigen Ansprüchen.

KURZE ERLÄUTERUNG DER FIGUREN

Die Erfindung soll nachfolgend anhand von Ausführungsbeispielen im Zusammenhang mit den Zeichnungen näher erläutert werden. Es zeigen:

Fig. 1     eine schematische Darstellung der Kommutierung mit einem Matrixkonverter umfassend 6 Eingangs-Phasen und 3 Ausgangs-Phasen wie sie für vollständige natürliche Kommutierung verwendet werden kann ;

Fig. 2     zeigt das schematische Schaltdiagramm eines Zyklokonverters mit 3 Eingangsphasen und 3 Ausgangsphasen einem bevorzugten Ausführungsbeispiel entsprechend;

Fig. 3     zeigt eine schematische Darstellung der Phasenverbindungen in beiden Betriebsweisen ; und

Fig. 4     zeigt ein schematisches Schaltdiagramm eines Matrixkonverters welcher mit sechs Phasen des hochzufah-

**5**

**EP 1 561 273 B1**

renden Generators verbunden ist, mit Mitteln, den Matrixkonverter im Zyklokonverter-Modus zu betreiben.

WEGE ZUR AUSFÜHRUNG DER ERFINDUNG

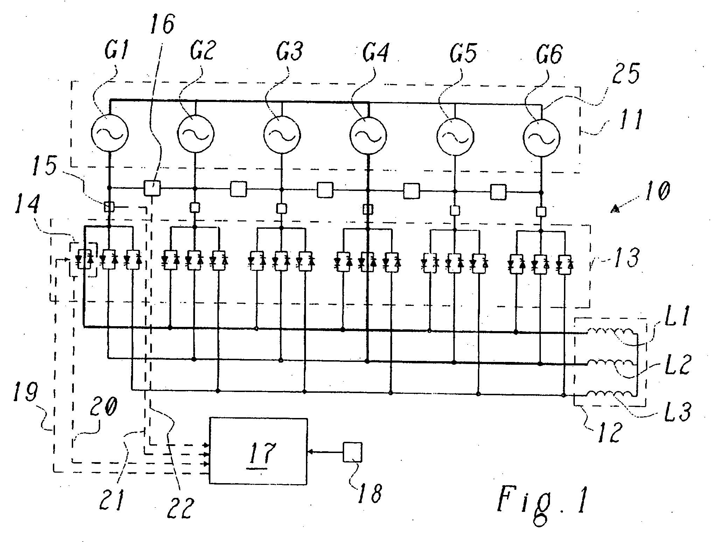

Fig. 1 zeigt ein schematisches Schaltdiagramm eines Matrixkonverters mit 6 Eingangsphasen und 3 Ausgangsphasen, welcher dazu ausgelegt und derart gesteuert ist, nur natürliche Kommutationen zu erlauben. Ein derartiger Matrixkonverter wurde in der DE 10051222 A1 sowie in der korrespondierenden EP 1199794 A2 offenbart. Das vorgeschlagene Prinzip kann aber auch bei Matrixkonvertem angewendet werden, welche Zwangskommutationen verwenden. Ein Matrixkonverter, wie er in diesen Dokumenten beschrieben ist, sowie die Betriebsweise, wie sie in diesen Dokumenten beschrieben ist, soll die Basis für die hier angegebenen Beispiele bilden. Der Matrixkonverter 10, wenn dazu verwendet, die Frequenz der vom Generator 11 erzeugten Spannung in eine Frequenz, wie sie von der Last 12, d. h. vom Netz, mit welchem der Generator verbunden ist, verlangt wird, zu konvertieren, verbindet die Phasen G1,..,G6 des Generators 11 mit den 3 Phasen L1,..,L3 einer Last 12. Der dazu erforderliche Leistungsteil 13 umfasst 18 bi-direktionale Schalter 14 in Form von anti-parallel geschalteten Thyristoren. Die Schalter 14 sind in einer (6x3) Matrix angeordnet. Eine Steuerung (Steuereinheit) 17 ist dazu vorgesehen, die Schalter 14 auszuwählen, wobei die Steuerung Zeitsignale einer Uhr 18 (clock frequency) erhält. Der Schaltstatus der Schalter 14 (ON,OFF) wird überwacht und jeweils an die Steuerung 17 über die Signalleitung 20 übermittelt. Die Schalter 14 werden von der Steuerung 17 über die Steuerleitung 19 ausgewählt.

In jeder der individuellen Phasen G1,..,G6 des Generators 11 ist ein Strommessgerät 15 angeordnet, welches jeweils das Vorzeichen des Phasenstroms über eine zweite Signalleitung 21 an die Steuerung 17 übermittelt. Zusätzlich sind Spannungsmessgeräte 16 zwischen den Phasen G1,..,G6 des Generators 11 angeordnet, welche Messgeräte das Vorzeichen der jeweiligen Phasendifferenz an die Steuerung 17 über eine dritte Signalleitung 22 übermitteln.

Wie in der DE 10051222 A1 sowie in der korrespondierenden EP 1199794 A2 offenbart, kann ein Kommutations-Kriterium für die Kommutierung innerhalb des Matrixkonverters abgeleitet werden. Dieses Kriterium basiert im wesentlichen auf dem Vorzeichen des Produkts der Phasen-Differenz-Spannungen zwischen der auszuschaltenden Phase und der einzuschaltenden Phase und des Phasenstroms der Phase, welche ausgeschaltet werden soll. Wenn dieses Produkt negativ ist, ist die Kommutierung zwischen den beiden Phasen erlaubt. Andernfalls ist die Kommutierung verboten. Die Kommutierung wird von der Steuerung 17 ausgelöst, wenn eine Kommutierung nach einer vorgegebenen Zeit vorliegt, und wenn das Kommutierungskriterium erfüllt ist. Da für Kommutierung eine " freie " Phase des Generators 11 erforderlich ist, und da jeweils gewisse Schalter 14 nicht aktiviert werden dürfen, muss die Steuerung 17 zu jedem Zeitpunkt wissen, um Kurzschlüsse zu verhindern, welche der Phasen G1,..,G6 frei sind, d. h. in welchen der Phasen G1,..,G6 alle zugehörigen Schalter 14 offen sind, d. h. keine Leistung tragen. Die Steuerung 17 muss ausserdem wissen, zu welcher der Ausgangsphasen L1,..,L3 die zu kommutierende Phase geschaltet wird, um exakt mit jenem Schalter zu schalten, welcher für diese Kommutierung geeignet ist. Das oben genannte Kommutienrngskriterium basiert auf der physikalischen Annahme, dass natürliche Kommutierung zwischen zwei Generatorphasen nur dann erfolgreich durchgeführt werden kann, wenn im Moment der Kommutierung t0 der Absolutwert des Stroms iGx der Phase Gx, von welcher man kommutieren will, fällt (abnimmt), während der Absolutwert des Stroms iGy der Phase Gy, zu welcher man kommutieren will, zunimmt. Diese notwendige Bedingung bedeutet, dass die Phase, zu welcher man kommutieren will, eine höhere elektromotive Kraft und gleichzeitig die gleiche Richtung aufweist wie jene Phase, von welcher man kommutieren will. Da aber die elektromotive Kraft nur im Leerlauf gemessen werden kann, muss ein Kriterium mit leicht zugänglichen und messbaren Grössen gefunden werden.

Wie ausführlich in der DE 10051222 A1 sowie in der korrespondierenden EP 1199794 A2 diskutiert, kann man ein derartiges Kommutierungskriterium zur Auswahl von ausschliesslich natürlichen Kommutierungen finden, das gegeben ist durch:

$$(1) \qquad\qquad I_k \cdot (V_k - V_l) \cdot K_{ijkl} < 0$$

mit der Konstante $K_{ijkl}$, welche von den Gegeninduktivitäten der Phasen des Generators und der Induktivität der Last abhängt. Entsprechend kann, wenn die Konstanten $K_{ijild}$, welche durch die Selbstinduktivitäten und die Gegeninduktivitäten des Generators und der Last bestimmt sind, bekannt sind, unter Zuhilfenahme der einfach messbaren Grössen Phasenstrom $I_k$ und Phasendifferenzspannung $V_k$-$V_i$ zu jedem Zeitpunkt bestimmt werden, ob oder ob nicht eine beabsichtigte natürliche Kommutierung zwischen den Phasen k und I des Generators durchgeführt werden kann. Die Bedingung oder Regel (1) hängt nur vom Vorzeichen der Ströme und Spannungen ab, nicht aber von deren momentanen Werten. Entsprechend kann die für die Kommutierungsbedingung erforderliche Information unter Zuhilfenahme von sehr einfachen Detektoren und Messgeräten erhalten werden.

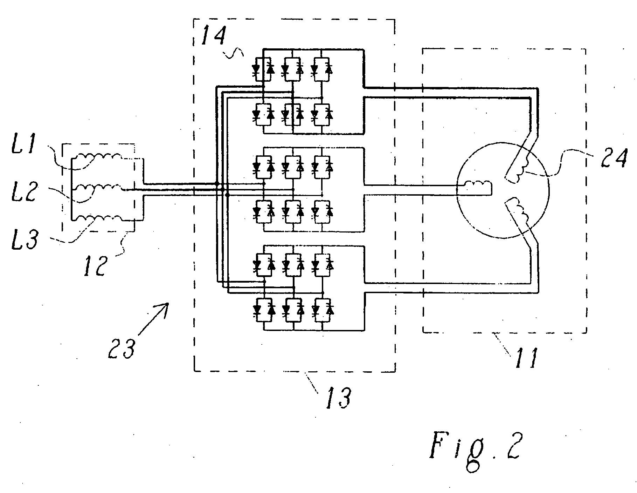

Der Entscheidungsprozess, der bei einem Matrixkonverter 10 gemäss Fig. 2 zur Ansteuerung der Schalter 14 führt, ist sehr einfach:

- Zunächst teilt die Uhr 18 der Steuerung 17 mit, wann gemäss der gewünschten Frequenz und ggf. einer rückgekoppelten Information eine neue Kommutierung stattfinden sollte, d.h., wann die drei gerade mit der Last 12 verbundenen Phasen durch andere ersetzt werden sollten.

- Durch die fortlaufende Überwachung der Schalter 14 und Phasen G1,..,G6 weiss die Steuerung 17, welche Phasen frei sind bzw. keinen Strom führen, und welche Phasen darauf sicher kommutiert werden können. Wenn eine oder zwei Kommutierungen möglich sind, werden die zugehörigen Schalter 14 getriggert. Wie bereits oben erwähnt, wird die gleichzeitige Kommutierung von drei Phasen vermieden. Eine (an sich mögliche) zweite und eine dritte Kommutierung werden aufgeschoben, bis sie sicher durchgeführt werden können.

Der vorgeschlagene Matrixkonverter hat keinen inhärenten reaktiven Leistungsverbrauch. Der Zyklokonverter z.B., der ebenfalls eine direkte AC/AC-Umwandlung durchführt, hat einen sehr kleinen Leistungsfaktor wegen der Triggerverzögerungen, die zum Erreichen einer sinusförmigen Spannung notwendig sind. Indirekte Konverter zeigen ebenfalls einen reduzierten Leistungsfaktor wegen des Sicherheitswinkels und der Magnetisierungsleistung, die zum Zerhacken der Gleichströme notwendig ist.

Insgesamt ergeben sich mit der Betriebsweise mit ausschliesslich natürlicher Kommutierung die folgenden Vorteile:

(1) hinsichtlich des Zyklokonverters:

- Der Leistungsfaktor des Konverters ist nahezu 1 anstatt 0,7, so dass die Eingangsleistung, die Leistung der Komponenten und die Verlustleistung reduziert sind.
- Unabhängig vom verbesserten Leistungsfaktor führt der neue Konversionsprozess zu inhärenten Verlusten, die um einen Faktor 2 kleiner sind und so ein leichteres und billigeres Kühlsystem ermöglichen.
- Die Ausgangsfrequenz ist nicht auf 1/3 der Eingangsfrequenz beschränkt.
- Die Steuerungselektronik ist sehr einfach.

(2) hinsichtlich des indirekten AC/DC/AC-Konverters (statischer Frequenzkonverter, Gleichrichter/Inverter):

- Die eingangsseitigen und ausgangsseitigen Leistungsfaktoren sind gleich, so dass Eingangsleistung und Leistungsbereich der Bauteile minimiert sind.
- Der Betrieb ist vollständig reversibel.
- Es gibt keine Energiezwischenspeicherung, was zu Einsparungen bei Kosten und Verlusten führt.
- Es gibt keine pulsierenden Drehmomente, nur einen geringen Gehalt an Harmonischen, und keinen Leistungsabfall am Eingang wegen zerhackter Gleichströme.
- Eine geringe Verlustleistung.

Eine an den Matrixkonverter 10 angeschlossene Synchronmaschine kann sowohl als Motor als auch als Generator betrieben werden. Sie kann vom Motorbetrieb auf den Generatorbetrieb umgeschaltet werden und so als Startermotor arbeiten. Sowohl ein voreilender wie auch ein nacheilender Betrieb sind ohne Änderung des Steuerverfahrens möglich. Auch ist ein eigenständiger Betrieb möglich, bei dem die Spannung durch die Erregung des Generators bestimmt wird, und die Steuerung der Frequenz zwischen dem Generator 11 und dem Konverter aufgeteilt ist.

Dennoch erlaubt aber, wie bereits oben erwähnt, ein derartiger Matrixkonverter nur die Konversion von Frequenz, und kann nicht für die Kontrolle der Spannung benutzt werden. Zum Hochfahren des Rotors unter Verwendung des Rotors als Motor ist aber bei niedrigen Geschwindigkeiten eine wirkliche Spannungsmodulation erforderlich, welche von einem derartigen Matrixkonverter nicht zur Verfügung gestellt werden kann. Dieses wohlbekannte start-up-Problem ergibt sich daraus, dass eine rotierende elektrische Maschine infolge des sehr schwachen elektrischen Widerstands eine beinahe reine Induktivität darstellt. Entsprechend ist die Impedanz mehr oder weniger proportional zur Rotationsgeschwindigkeit. Bei Stillstand stellt eine derartige rotierende Maschine beinahe einen Kurzschluss dar, und die angelegte Spannung sollte reduziert werden. Bis zu einem wesentlichen Teil der Nenngeschwindigkeit muss die angelegte Spannung proportional zur Rotationsgeschwindigkeit sein (konstante V/f Regel). Spannungskontrolle ist nicht mehr erforderlich, sobald die Rotationsgeschwindigkeit oberhalb von 20 bis 30% der Nenngeschwindigkeit liegt. Es ist von grösserer Bedeutung zu realisieren, dass diese Bedingung perfekt mit dem Frequenzbereich eines Zyklokonverters übereinstimmt, dessen Ausgangsfrequenz auf einen Drittel der Frequenz der Quelle (Netz) beschränkt ist.

Entsprechend soll die Architektur eines Matrixkonverters, vgl. Fig. 1, mit der wohlbekannten Architektur eines Zyklokonverters gemäss Fig. 2 verglichen werden.

Die Anzahl von Schaltern ist in beiden Fällen gleich. Der einzige topologische Unterschied befindet sich an der Sternverbindung der rotierenden Maschine.

Im Hinblick auf die Betriebsweise, wie in den Figuren 1 und 2 dargestellt, ist auch der Pfad des Stroms ziemlich ähnlich. In diesen Figuren sind ähnliche Pfade in einem Matrixkonverter (Fig. 1) und in einem Zyklokonverter (Fig. 2) mit dicken Linien gezeichnet, um darzustellen, dass tatsächlich identische Pfade für diese beiden Topologien gefunden werden können. Es bleibt dennoch die Frage, wie es möglich ist, ein Umschalten vom Matrixkonverter-Modus zum Zyklokonverter-Modus zu erlauben.

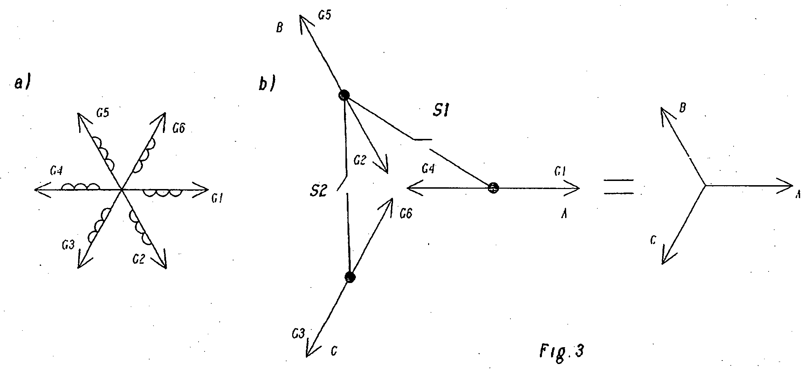

Die Darstellung von Fig. 3 zeigt, dass nur 2 zusätzliche Schalter erforderlich sind, um ein Umschalten von einer Betriebsweise in die andere für 6 Generatorphasen und 3 Netzphasen zu erlauben. Fig. 3a) zeigt die Bedingungen, wenn der Matrix-konverter im Matrixkonverter-Modus betrieben wird in einem 6- Phasen Arrangement und mit einer gemeinsamen schwebenden Erde 25 wie in Fig. 1 dargestellt. Fig. 3b) zeigt die zwei Schalter S1 und S2, die erforderlich sind, um eine umgekehrte ("reverse") Betriebsweise des Matrixkonverters in Zyklokonverter-Modus zu erlauben. Die Darstellung in Fig. 3 zeigt entsprechend, dass nur 2 zusätzliche Schalter erforderlich sind, um von einer Betriebsweise in die andere zu schalten.

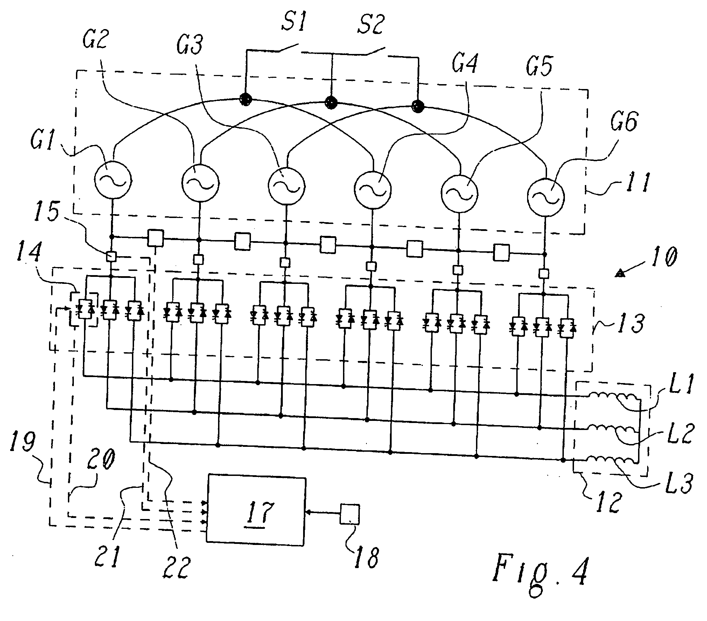

Die Implementation dieser zwei Schalter wird im schematischen Diagramm der Fig. 4 dargestellt. Mit anderen Worten müssen, um ein Umschalten zwischen den beiden Betriebsweisen zu erlauben, einfach zwei (oder mehr für den Fall einer anderen Zahl von Phasen) Schalter an den Wicklungen des Stators vorgesehen werden, um eine Trennung der schwebenden Erde 25 zu erlauben, welche schwebende Erde 25 erforderlich ist für die Matrixkonverter-Betriebsweise, deren Trennung in Untergruppen A,B,C aber für eine Betriebsweise als Zyklokonverter notwendig ist. Die Schalter können mechanische Schalter oder Festkörperschalter sein. Die Schalter müssen offen sein für den Zyklokonverter-Modus, und für Matrixkonverter-Modus werden die Schalter einfach geschlossen unter Bildung einer schwebenden Erde 25.

Vorteile der vorgeschlagenen Lösung:

• Ein erster Vorteil der vorgeschlagenen Lösung liegt darin, dass nur eine kleine Veränderung erforderlich ist, d. h. normale Betriebsweise des Matrixkonverters und die zugehörige Hardware ändern kaum.

• Ein weiterer Vorteil liegt darin, dass der Zyklokonverter-Modus dem Fachmann wohlbekannt ist, und dass für diese Betriebsweise im Prinzip keine weiteren Entwicklungen erforderlich sind (für allgemeine Informationen zum Thema des Betriebs eines Zyklokonverters vgl. z. B. das Buch von Thomas H. Barton: Rectifiers, Cycloconverters and AC Controllers, Clarendon Press, Oxford, 1994, darin insbesondere die Seiten 420 bis 478).

• Ausserdem gibt es keine zwingenden Erfordernisse für die zusätzlichen Mittel zum Schalten. Es kann sich dabei um mechanische Schalter oder um Festkörperschalter handeln.

Die Schaltleistung der Schalter ist sehr niedrig. Die Schalter sind normalerweise offen beim Stillstand wenn Spannung und Strom Null sind. Sie werden geschlossen, sobald der Zyklokonverter-Modus abgeschlossen ist. Wenn man vom Matrix-konverter-Modus zum Zyklokonverter-Modus zurückschalten muss, ist es immer möglich, alle Schalter des Konverters auszuschalten, um alle Ströme innerhalb weniger Millisekunden auszuschalten.

Es handelt sich mit anderen Worten um eine billige und zuverlässige Lösung.

Möchte man nun eine derartigen Matrixkonverter für das Hochfahren einer Einheit verwenden, d. h. unter Verwendung des Generators als Motor, sollten die folgenden Dinge beachtet werden:

Geht man davon aus, dass das Netz eine Frequenz von ungefähr 50 Hz aufweist, so muss die Spannung beim Hochfahren in einer im wesentlichen linear zunehmenden Weise (V/f-Regel), bis ungefähr 10 bis 15 Hz, geregelt werden. Dies kann, wie oben beschrieben, nicht erreicht werden, wenn ein Matrixkonverter in seinem Matrixkonverter-Modus betrieben wird, da keine Spannungskontrolle möglich ist. Andererseits erlaubt ein Zyklokonverter, wie ebenfalls oben beschrieben, Spannungskontrolle und die Konversion von Frequenz bis zu einer Frequenz von einem Drittel des Netzes, welches in diesem Falle durch die genannten 50 Hz gegeben ist. Entsprechend ist, wenn das Netz als Energiequelle verwendet wird, Zyklokonverter-Modus möglich bis zu einer Frequenz von ungefähr 16 Hz, was in perfekter Weise auf die vorliegende Situation passt, da für höhere Frequenzen keine Spannungskontrolle erforderlich ist, und der Rotor durch einen Matrixkonverter im Matrixkonverter-Modus betrieben werden kann. Mit anderen Worten passen beiden Betriebsweisen, Matrixkonverter-Modus und Zyklokonverter-Modus ideal zueinander für das Hochfahren eines Generators, da Zyklokonverter-Modus nur vernünftigerweise bis zu einem Drittel der Netzfrequenz möglich ist und gleichzeitig in diesem Bereich Spannungskontrolle erlaubt, während für höhere Frequenzen der Antrieb des Generators nicht mit Spannungskontrolle durchgeführt werden muss, wodurch Matrix-Konverter-Modus möglich ist. Werden die eingangs genannten Mittel zum Schalten zur Verfügung gestellt, kann der Bedarf nach einem separaten Bauteil zum Hochfahren eliminiert werden, wodurch wesentliche Einsparungen möglich sind.

Entsprechend wird die folgende Strategie zum Hochfahren vorgeschlagen:

Der Matrixkonverter wird bis zu 20 bis 30% der Nenngeschwindigkeit als Zyklokonverter betrieben. Diese Geschwindigkeit liegt immer noch unterhalb jener Geschwindigkeit, bei welcher die Gasturbine tatsächlich Leistung entwickelt. Von 20 bis 30% der Nenngeschwindigkeit hoch bis 50% oder sogar bis 100% kann der Matrixkonverter einfach in seiner normalen Betriebsweise gefahren werden, wo nur Frequenzkontrolle möglich ist.

BEZUGSZEICHENLISTE

| | |
|---|---|
| 10 | Matrixkonverter |
| 11 | Generator |
| 12 | Last/Netz (je nach Betriebsmodus) |
| 13 | Leistungsteil |
| 14 | Schalter (bi-direktional) |
| 15 | Strommessgerät |
| 16 | Spannungsmessgerät |
| 17 | Steuerung (Steuereinheit) |
| 18 | Uhr |
| 19 | Steuerleitung |
| 20,...,22 | Signalleitung |
| 23 | Zyklokonverter |
| 24 | Wicklung vom Stator |
| 25 | schwebende Erde |
| G1,...,G6 | Phase (Generator) |
| L1,...L3 | Phase (Last/Netz, je nach Betriebsmodus) |
| S | Schalter |
| S1,S2 | Statorseitige Schalter um den Zyklokonverter-Modus ein- respektive auszuschalten |

**Patentansprüche**

1. Verfahren zum Betrieb eines Matrixkonverters (10), welcher, wenn er zur Konversion von m Phasen (G1,..,G6) eines Generators (11) in Wechselspannung mit n (n<m) Phasen (L1,..,L3) einer mit einem Netzwerk verbunden Last (12) betrieben wird, abwechselnd die n Phasen der Last (12) mit einer Mehrzahl von kontrollierbaren bi-direktionalen, in einer (m x n)-Matrix angeordneten Schaltern (14) verbindet, wobei n Phasen des Generators (11) immer mit der Last (12) verbunden sind, während (m-n) Phasen des Generators (11) nicht mit der Last (12) verbunden sind, **dadurch gekennzeichnet, dass**
der Matrixkonverter (10) im Zyklokonverter-Modus unter Verwendung von über das Netz (12) verfügbarer Leistung betrieben wird, wobei die Gruppe von m Phasen (G1,...,G6) des Generators in entsprechende Untergruppen (A,B,C) aufgeteilt wird.

2. Verfahren nach Anspruch 1, **dadurch gekennzeichnet, dass** der Matrixkonverter (10), wenn er zur Konversion von Energie des Generators (11) zur Last (12) betrieben wird, nur die Regelung der Frequenz, nicht aber der Spannung erlaubt.

3. Verfahren nach einem der vorhergehenden Ansprüche, **dadurch gekennzeichnet, dass** der Matrixkonverter (10), wenn er zur Konversion von Energie des Generators (11) zur Last (12) betrieben wird, nur das Umschalten von einer ausgewählten verbundenen Phase (Gk) des Generators (11) zu einer ausgewählten, nicht-verbundenen Phase (GI) des Generators (11) erlaubt, sodass nur natürliche Kommutierungen auftreten.

4. Verfahren nach einem der vorhergehenden Ansprüche, **dadurch gekennzeichnet, dass** der Generator 6 Phasen aufweist (G1 ,..,G6), dass die Last (12) 3 Phasen aufweist, und dass für den Zyklokonverter-Modus die 6 Phasen in 3 Untergruppen (A:G1,G4;B:G2,G5;C:G3,G6) aufgeteilt sind.

**5.** Verfahren nach einem der vorhergehenden Ansprüche, **dadurch gekennzeichnet, dass** als bi-direktionale Schalter (14) anti-parallele Thyristoren verwendet werden.

**6.** Verwendung eines Verfahrens nach einem der vorhergehenden Ansprüche zum Hochfahren eines Generators (11).

**7.** Verwendung nach Anspruch 6, **dadurch gekennzeichnet, dass** bis zu 20 bis 30% der Nenngeschwindigkeit des Generators (11), der Matrixkonverter (10) im Zyklokonverter-Modus betrieben wird, während entsprechend anschliessend von 20 bis 30% der Nenngeschwindigkeit des Generators bis 50% oder sogar hoch bis 100%, der Matrixkonverter in seinem normalen Betriebsmodus ohne unterbrochene Untergruppen (A:G1,G4;B:G2,G5; C:G3,G6) betrieben wird.

**8.** Generator umfassend einen zugeschalteten Matrixkonverter (10) zur Durchführung eines Verfahrens nach einem der Ansprüche 1 bis 5 oder zu einer Verwendung gemäss einem der Ansprüche 6 oder 7, wobei der Matrixkonverter (10) umfasst eine Mehrzahl von bi-direktionalen, in einer (m x n)-Matrix angeordneten Schaltern (14), wobei die von einer Steuerung (17) kontrollierten Schalter (14) m Eingänge mit n Ausgängen auswählbar verbinden, wobei erste Mittel (15) zur Bestimmung des Vorzeichens der Ströme der Eingänge angeordnet sind, und wobei zweite Mittel (16) zur Bestimmung des Vorzeichens der Spannungen zwischen den Eingängen angeordnet sind, und wobei die ersten und zweiten Mittel (15 oder 16) in aktiver Verbindung mit der Steuerung (17) stehen, **dadurch gekennzeichnet, dass** der Matrixkonverter (10) im Zyklokonverter-Modus unter Verwendung von über das Netz (12) verfügbarer Leistung betreibbar ist, wobei die Gruppe von m Phasen (G1,...,G6) des Generators in entsprechende Untergruppen (A, B, C) mittels Schaltern (S.1, S2) an den Wicklungen des Stators aufgeteilt ist.

**9.** Generator nach Anspruch 8, **dadurch gekennzeichnet, dass** die Schalter (14) mit der Steuerung (17) über eine Signalleitung (20) verbunden sind, über welche Signalleitung (20) Information über den Schalt-Status der Schalter (14) an die Steuerung (17) übermittelt wird.

**10.** Generator nach einem der Ansprüche 8 oder 9, **dadurch gekennzeichnet, dass** die bi-direktionalen Schalter (14) antiparallel geschaltete Thyristoren umfassen.

**Claims**

**1.** Method for operating a matrix converter (10), which, when it is being operated to convert m phases (G1,..,G6) of a generator (11) into alternating voltage with n (n<m) phases (L1,..,L3) of a load (12) that is connected to a network, alternately connects the n phases of the load (12) to a plurality of controllable bidirectional switches (14) that are arranged in an (m × n) matrix, wherein n phases of the generator (11) are always connected to the load (12), whilst (m-n) phases of the generator (11) are not connected to the load (12),
**characterized in that**
the matrix converter (10) is operated in a cycloconverter mode using power available via the network (12), wherein the group of m phases (G1,..,G6) of the generator is divided into corresponding subgroups (A, B, C).

**2.** Method according to Claim 1, **characterized in that**, when it is being operated for the conversion of energy of the generator (11) to the load (12), the matrix converter (10) only allows control of the frequency, but not of the voltage.

**3.** Method according to one of the preceding claims, **characterized in that**, when it is being operated for the conversion of energy of the generator (11) to the load (12), the matrix converter (10) only allows switching over from a selected connected phase (Gk) of the generator (11) to a selected non-connected phase (Gl) of the generator (11), such that only natural commutations occur.

**4.** Method according to one of the preceding claims, **characterized in that** the generator has 6 phases (G1,..,G6), **in that** the load (12) has 3 phases, and **in that**, for the cycloconverter mode, the 6 phases are divided into 3 subgroups (A: G1, G4; B: G2, G5; C: G3, G6).

**5.** Method according to one of the preceding claims, **characterized in that** antiparallel thyristors are used as the bidirectional switches (14).

**6.** Use of a method according to one of the preceding claims for starting up a generator (11).

**7.** Use according to Claim 6, **characterized in that**, up to 20 to 30% of the rated speed of the generator (11), the matrix converter (10) is operated in the cycloconverter mode, whilst correspondingly thereafter, from 20 to 30% of the rated speed of the generator up to 50% or even right up to 100%, the matrix converter is operated in its normal operating mode without disconnected subgroups (A: G1, G4; B: G2, G5; C: G3, G6).

**8.** Generator comprising an additionally connected matrix converter (10) for carrying out a method according to one of claims 1 to 5 or for a use according to either of Claims 6 and 7, wherein the matrix converter (10) comprises a plurality of bidirectional switches (14) arranged in an (m × n) matrix, wherein the switches (14), controlled by a controller (17), selectably connect m inputs to n outputs, wherein first means (15) for determining the operational sign of the currents of the inputs are arranged, and wherein second means (16) for determining the operational sign of the voltages between the inputs are arranged, and wherein the first and second means (15 or 16) are in active connection with the controller (17), **characterized in that** the matrix converter (10) can be operated in the cycloconverter mode using power available via the network (12), wherein the group of m phases (G1,..,G6) of the generator is divided into corresponding subgroups (A, B, C) by means of switches (S1, S2) on the windings of the stator.

**9.** Generator according to Claim 8, **characterized in that** the switches (14) are connected to the controller (17) by way of a signal line (20), by way of which signal line (20) information concerning the switching status of the switches (14) is transmitted to the controller (17).

**10.** Generator according to either of Claims 8 and 9, **characterized in that** the bidirectional switches (14) comprise antiparallel-connected thyristors.

## Revendications

**1.** Procédé de fonctionnement d'un convertisseur matriciel (10), lequel, s'il est utilisé pour la conversion des m phases (G1,...,G6) d'un générateur (11) en tension alternative avec n (n<m) phases (L1,...,L3) d'une charge (12) reliée à un réseau, relie en alternance les n phases de la charge (12) à une pluralité de commutateurs (14) contrôlables, bidirectionnels, disposés dans une matrice (m x n), des n phases du générateur (11) étant toujours reliées à la charge (12), alors que des (m-n) phases du générateur (11) ne sont pas reliées à la charge (12), **caractérisé en ce que** le convertisseur matriciel (10) est utilisé en mode de cycloconvertisseur en employant de la puissance disponible sur le réseau (12), le groupe de m phases (G1,...,G6) du générateur étant subdivisé en sous-groupes correspondants (A,B,C).

**2.** Procédé selon la revendication 1, **caractérisé en ce que** le convertisseur matriciel (10) lorsqu'il est utilisé pour la conversion de l'énergie du générateur (11) en charge (12), ne permet la régulation que de la fréquence, mais pas de la tension.

**3.** Procédé selon l'une quelconque des revendications précédentes, **caractérisé en ce que** le convertisseur matriciel (10), lorsqu'il est utilisé pour la conversion de l'énergie du générateur (11) en charge (12), ne permet que la commutation d'une phase reliée sélectionnée (Gk) du générateur (11) en une phase non reliée sélectionnée (GI) du générateur (11) de manière à ce que seules des commutations naturelles se produisent.

**4.** Procédé selon l'une quelconque des revendications précédentes, **caractérisé en ce que** le générateur comporte 6 phases (G1,...,G6), **en ce que** la charge (12) comporte 3 phases et **en ce que** pour le mode de cycloconvertisseur, les 6 phases sont subdivisées en 3 sous-groupes (A : G1, G4 ; B : G2, G5 ; C : G3,G6).

**5.** Procédé selon l'une quelconque des revendications précédentes, **caractérisé en ce que** des thyristors antiparallèles sont utilisés en tant que commutateurs bidirectionnels (14).

**6.** Utilisation d'un procédé selon l'une quelconque des revendications précédentes pour la mise en route d'un générateur (11).

**7.** Utilisation selon la revendication 6, **caractérisée en ce que** le convertisseur matriciel (10) est utilisé en mode de cycloconvertisseur jusqu'à 20 à 30% de la vitesse nominale du générateur (11), alors que le convertisseur matriciel est conformément utilisé ultérieurement dans son mode de fonctionnement normal sans sous-groupes interrompus (A : G1, G4 ;B :G2, G5 ;C : G3, G6) de 20 à 30% de la vitesse nominale du générateur, jusqu'à 50% ou même fortement jusqu'à 100%.

8. Générateur comprenant un convertisseur matriciel connecté (10) pour mettre en oeuvre un procédé selon l'une quelconque des revendications 1 à 5 ou pour l'utilisation selon l'une quelconque des revendications 6 ou 7, le convertisseur matriciel (10) comprenant une pluralité de commutateurs (14) bidirectionnels, disposés dans une matrice (m x n), les commutateurs (14) contrôlés par une commande (17) reliant de façon sélective les m entrées aux n sorties, des premiers moyens (15) étant disposés pour déterminer le signe des courants des entrées et des deuxièmes moyens (16) étant disposés entre les entrées pour déterminer le signe des tensions et les premiers et deuxièmes moyens (15 ou 16) étant en liaison active avec la commande (17), **caractérisé en ce que** le convertisseur matriciel (10) peut être utilisé en mode de cycloconvertisseur en employant de la puissance disponible sur le réseau (12), le groupe des m phases (G1,...,G6) du générateur étant subdivisé en sous-groupes correspondants (A,B,C) au moyen des commutateurs (S1,S2) sur les enroulements du stator.

9. Générateur selon la revendication 8, **caractérisé en ce que** les interrupteurs (14) sont reliés à la commande (17) par une ligne de signalisation (20), ligne de signalisation (20) par le biais de laquelle une information sur l'état de commutation des commutateurs (14) est transmise à la commande (17).

10. Générateur selon l'une quelconque des revendications 8 ou 9, **caractérisé en ce que** les commutateurs bidirectionnels (14) comprennent des thyristors connectés de manière antiparallèle.

Fig. 1

Fig. 2

a)

b)

Fig. 3

EP 1 561 273 B1

*Fig. 4*

EP 1 561 273 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5594636 A
- DE 10051222 A1

- EP 1199794 A2

**In der Beschreibung aufgeführte Nicht-Patentliteratur**

- **B. N. MOHAN et al.** Power Electronics. John Wiley & Sons, 11-12

- **THOMAS H. BARTON.** Rectifiers, Cycloconverters and AC Controllers. Clarendon Press, 1994, 420-478